Europäisches Patentamt

European Patent Office

Office européen des brevets

(19)

(11) Publication number: **0 176 655**
**A2**

(12) **EUROPEAN PATENT APPLICATION**

(21) Application number: **85103026.2**

(22) Date of filing: **15.03.85**

(51) Int. Cl.⁴: **G 05 B 19/405**

(30) Priority: **03.10.84 JP 206203/84**

(43) Date of publication of application:
**09.04.86 Bulletin 86/15**

(84) Designated Contracting States:
**DE FR GB IT NL**

(71) Applicant: **HITACHI, LTD.**
**6, Kanda Surugadai 4-chome Chiyoda-ku**
**Tokyo 100(JP)**

(72) Inventor: **Kurokawa, Maohiro**
**1023, Oaza Tagai**
**Shibata-shi Niigata-ken(JP)**

(72) Inventor: **Abe, Ryouichi**
**1-13-2, Midori-cho**
**Shibata-shi Niigata-ken(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Programmable controller.**

(57) A programmable controller comprising storage means (4, 5) to store a program, a central processing unit (3) which executes a logic operation of an input signal on the basis of the program stored in the storage means (5), measurement means (8) to measure an arithmetic processing time of the program, and a measured value storing unit (9) which stores the arithmetic processing time measured by the measurement means, display control means (3, 7) performing a control so as to display the arithmetic processing time stored in the measured value storing unit (9).

*FIG. 9*

EP 0 176 655 A2

## Programmable Controller

### Background of the Invention

In conventional programmable sequence controllers (hereinbelow, termed 'PC'), an arithmetic processing speed is mentioned as the performance, and various contrivances are made for enhancing the processing speed. Pertinent to the devices of this type are, for example, the official gazettes of Japanese Patent Application Laying-open No. 56-63606 and Japanese Patent Application Laying-open No. 56-63607.

Particularly in case of performing a high speed control, the arithmetic processing speed is an important point. It has therefore been necessary to roughly compute as to a series of sequence program contents beforehand and to check whether or not they can be responded to as sequence operations, and further to actually operate the PC and to confirm that no malfunction occurs.

When the contents are computed in detail, any malfunction is found in advance, but a very long time is required for the computation. This problem has not been taken into account.

In a small-sized PC, the arithmetic processing time is usually 10 ms - 30 ms/1000 steps, and a signal shorter than the arithmetic processing time (one scan time) cannot be responded to. For this reason, a series of sequence operations become abnormal in some cases.
As an expedient for solving such phenomenon, the arithmetic
processing time itself may be shortened unlimitedly
as in a large-sized computer.  However, this is unreasonable
for the programmable controller which is intended to
be small in size and low in cost.

Summary of the Invention

An object of the present invention is to eliminate
the drawback described above, and to provide a programmable
controller which can display the arithmetic processing
time of a sequence program, so that the computation
of the arithmetic processing time is dispensed with,
and that a malfunction concerning a response speed can
be prevented from occurring.

Another object of the present invention is to provide
a programmable controller which displays the maximum
value, minimum value and average value of the arithmetic
processing time of a program, whereby a margin for an
input signal can be known in a programming mode, and
a reliable program can be created even in a high speed
control.

Still another object of the present invention is
to provide a programmable controller which can measure
the input time of an external input signal and facilitates
finding a cause at the time of an erroneous response so as to permit easy maintenance.

The present invention consists in a programmable controller characterized by comprising storage means to store a program, a central processing unit which executes a logic operation of an input signal on the basis of the program stored in said storage means, measurement means to measure an arithmetic processing time of the program, and display control means to perform a control so as to display the arithmetic processing time measured by said measurement means.

Also, the present invention consists in a programmable controller characterized by comprising storage means to store a program, a central processing unit which executes a logic operation of an input signal on the basis of the program stored in said storage means, measurement means to measure an arithmetic processing time of the program, a measured value storing unit which stores the arithmetic processing time measured by said measurement means, and display control means to perform a control so as to display the arithmetic processing time stored in said measured value storing unit.

The measured value storing unit may well be so constructed as to be divided in two or more parts, in any of which the measured value is stored according to the magnitude thereof. Further, the measurement means may well be so constructed as to be fed with an input signal and to measure either of the ON time and OFF time of the input signal.

According to the present invention, a programmable controller is constructed so as to comprise measurement means to measure the arithmetic processing time of a program, and display control means to perform a control for displaying the arithmetic processing time measured by said measurement means.  It is therefore possible to provide a programmable controller in which the arithmetic processing time of a sequence program can be known even while the sequence program is being created, so the labor of rough computations is dispensed with, and a sequence program free from any erroneous response can be created, so a malfunction concerning a response speed can be prevented from occurring.

Brief Description of the Drawings

Fig. 1 is a block diagram showing the arrangement of a programmable controller in a first embodiment of the present invention;

Fig. 2 is a front view of a program unit in the first embodiment of the present invention;

Fig. 3 is a flow chart showing the flow of a display operation in the first embodiment of the. present invention;

Figs. 4 and 5 are front views each showing an example wherein the display portion of the program unit indicates that a numerical value is an arithmetic processing time;

Fig. 6 is a block diagram showing the arrangement of a measuring unit;

Fig. 7 is a diagram showing an example of a program;

Fig. 8 is a time chart showing the relationship between the scan time and the signal input time;

Fig. 9 is a block diagram showing the arrangement of a programmable controller in a second embodiment of the present invention;

Fig. 10 is a front view of a program unit in the second embodiment of the present invention;

Fig. 11 is a flow chart showing the flow of the display operation of the second embodiment of the present invention;

Fig. 12 is a block diagram showing the arrangement of a programmable controller in a third embodiment of the present invention;

Fig. 13 is a time chart of an input signal time measurement in the third embodiment of the present invention;

Fig. 14 is a circuit diagram showing the arrangement of an edge detection unit in the third embodiment of the present invention;

Fig. 15 is a time chart showing the process of measurement signal generation in the edge detection unit; and

Figs. 16, 17 and 18 are front views each showing an example wherein the display portion of a program unit indicates that a numerical value is the time of an input signal.

Description of the Preferred Embodiments

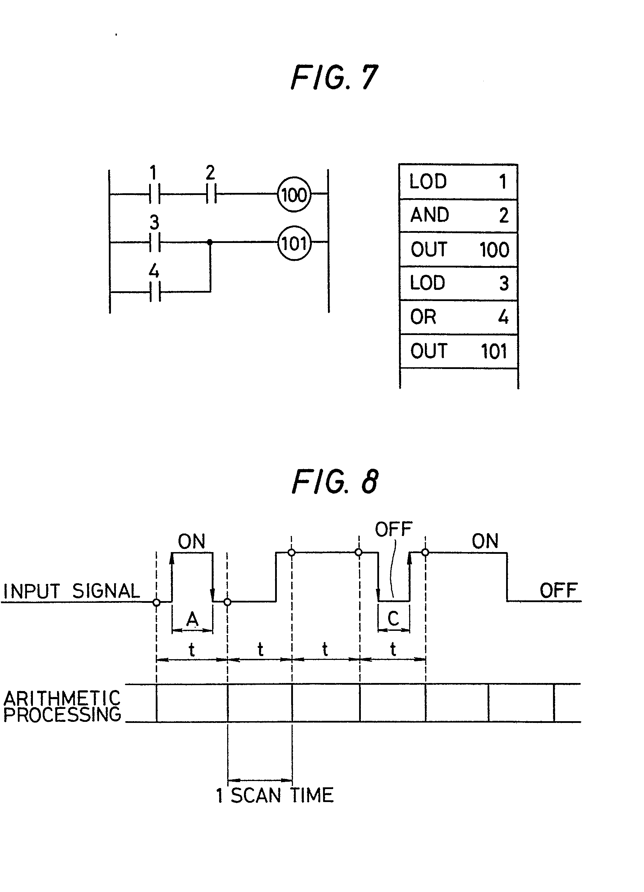

Heretofore, in case of performing especially a high speed control with a programmable controller, the arithmetic processing speed has been an important point, and it has therefore been necessary to roughly compute for a series of sequence program contents as exemplified in Fig. 7 in advance and to check whether or not they can be responded to as sequence operations, and further to actually operate the PC and to confirm that no malfunction takes place.

When the contents are computed in detail, any malfunction is found beforehand, but a very long time is required for the computation.

A small-sized PC usually has an arithmetic processing time of 10 ms - 30 ms/1000 steps, and it cannot respond to a signal whose input time is shorter than the arithmetic processing time (one scan time) $t$, for example, an input signal A or C in Fig. 8. For this reason, a series of sequence operations become abnormal in some cases. In order to solve such phenomenon, the arithmetic processing time itself may be shortened unlimitedly as in a large-sized computer. On account of the restrictions of dimensions and price, however, this measure is difficult to apply to the programmable controller which is intended to be small in size and low in cost.

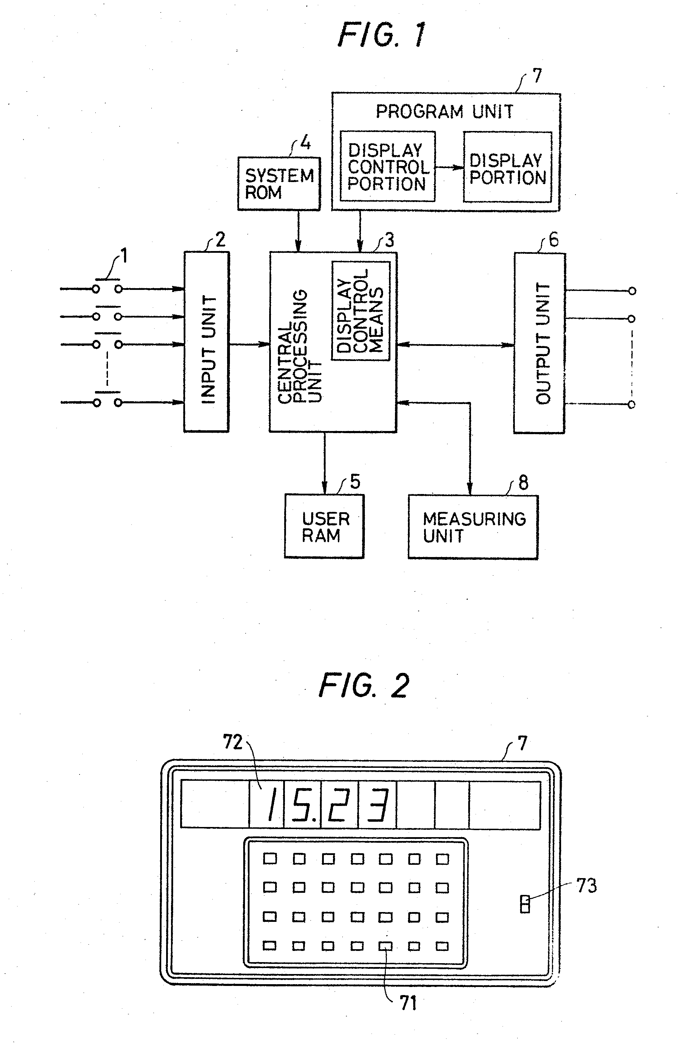

Now, an embodiment of the present invention will be described with reference to Figs. 1 - 8.

Figs. 1 - 6 illustrate the first embodiment of the present invention. Fig. 1 shows the block arrangement of the present embodiment. An external input signal source 1 is connected to an input unit 2, which is connected to a CPU or a central processing unit 3. A ROM 4 and a RAM 5 which are storage means are respectively connected to the CPU 3. The ROM 4 and the RAM 5 are usually used as a system ROM and a user RAM, respectively. The RAM 5 stores therein programmed sequence contents, while the ROM 4 stores therein processing procedures according to which the CPU 3 performs logic operations etc. based on programs stored in the RAM 5. The ROM 4 also stores therein the processing procedure of the CPU 3 which is display control means for controlling the display of a display portion 72. A program unit 7 for programming sequence contents and an output unit 6 for transferring out the operated result of the CPU 3 are connected to the CPU 3. In the present embodiment, the program unit 7 is mounted so as to be detachable from the PC proper, and as shown in Fig. 2, it comprises operating keys 71, the display portion 72, and a selector switch 73 for selecting the operating status of the PC. The transfer of a program from the program unit 7 to the PC proper is electrically done through electric wires, but it may well be done by optical communication with photocouplers or optical fibers. Further, a measuring unit 8 which is measurement means is connected to the CPU 3, and an arithmetic processing time is measured under the control of the CPU 3.

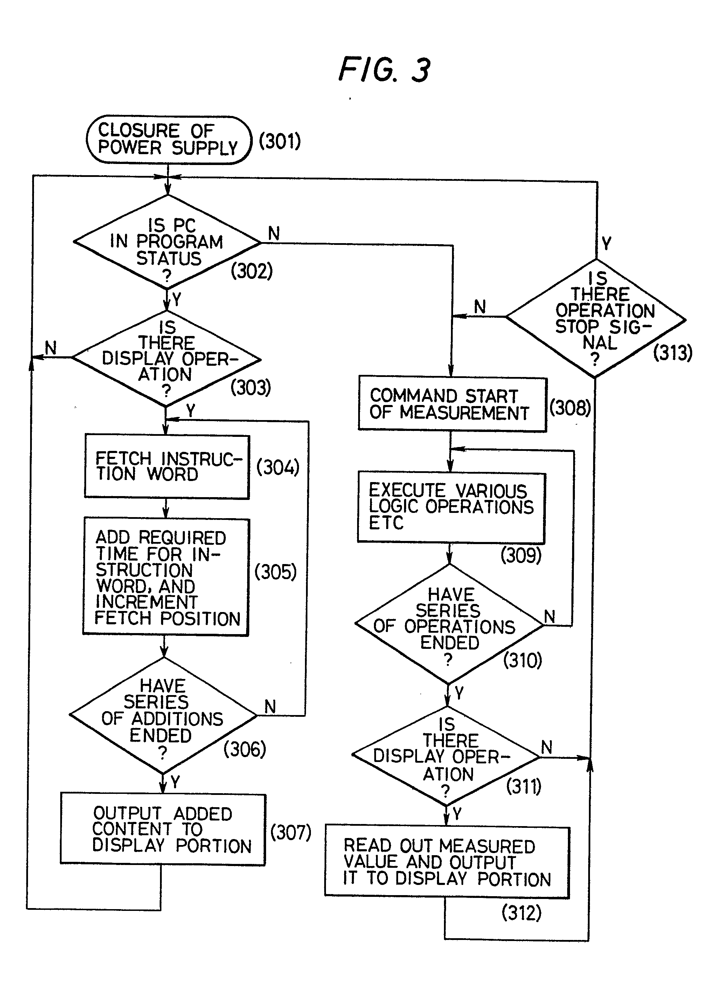

The flow of operations in the present embodiment is shown in Fig. 3.

First, when the power supply of the programmable controller is closed (Step 301), whether the PC is in a program status or a status capable of executing a logic operation etc. is decided by the CPU 3 and the system ROM 4 (Step 302). This decision is rendered on the basis of the status of the selector switch 73.

If the PC is in the program status, the control flow proceeds to the next processing step which checks "if there is a display operation" (Step 303).

The above 'display operation' is the display operation of displaying the arithmetic processing time, and it differs from an ordinary display operation in the case of creating a program.

Next, when "there is the display operation" is decided, a program content is read out, that is, an instruction word is fetched (Step 304). Subsequently, a period of time required for this instruction word is added and the result is stored in the CPU 3, whereupon the fetch position of an instruction word is incremented (Step 305). Whether or not a series of fetch and add processes have ended is checked (Step 306). Unless they have ended, the control flow returns to Step 304, and the fetch and add processes are repeated.

If they have ended, the control flow proceeds to the next processing step, at which the added content stored in the CPU 3, namely, the total time of the required times of the series of instruction words is output to the display portion 72 in order to display it (Step 307).

When the above processes have ended, the control flow returns to Step 302 again. In this regard, it is needless to say that Step 303 decides 'NO' when operating keys are left depressed. Besides, although ordinary manipulations or processing operations of display etc. in the case of creating a program are omitted from the illustration of the figure, various decision portions or processing portions therefor may well be provided before Step 303 by way of example.

Next, there will be explained a case where Step 302 affords the answer of NO, namely, where the PC is not in the program status.

The CPU 3 gives the measuring unit 8 a measurement start command (Step 308). Thereafter, it executes various logic operations etc. on the basis of sequence contents stored in the user RAM 5 (Step 309), and it decides whether or not a series of operations have ended (Step 310). Unless they have ended, the control flow returns to Step 309 at which various logic operations etc. are repeatedly performed.

When the series of operations have ended, the control flow proceeds to the next processing step to decide "if there is a display operation" (Step 311). If the result is YES, the CPU 3 reads out a measured value from the measuring unit 8 and outputs it in order to be displayed by the display portion 72 (Step 312).

When the above processes have ended, the presence or absence of an operation stop signal is decided (Step 313). If the result is NO indicative of the absence, the control flow returns to Step 308 and is repeated from the process of the measurement start command again. The step "Is there a display operation?" may well be set so as to afford NO when operating keys are left depressed. If the answer of Step 313 is YES, the control flow returns to Step 302.

As regards processes responsive to operations for ordinary monitoring display (the content of a sequence program, the ON/OFF statuses of external and internal signals, etc.), decision or processing portions may well be disposed before Step 311.

The programmable controller is generally furnished with an internal output (a latch output also called 'internal relay'), a timer, a counter etc. besides an external input/output called 'I/O', and Nos. are respectively assigned to them. By designating the Nos. of the timer, counter etc., the lapsed conditions of periods of time and count values can be monitored and displayed.

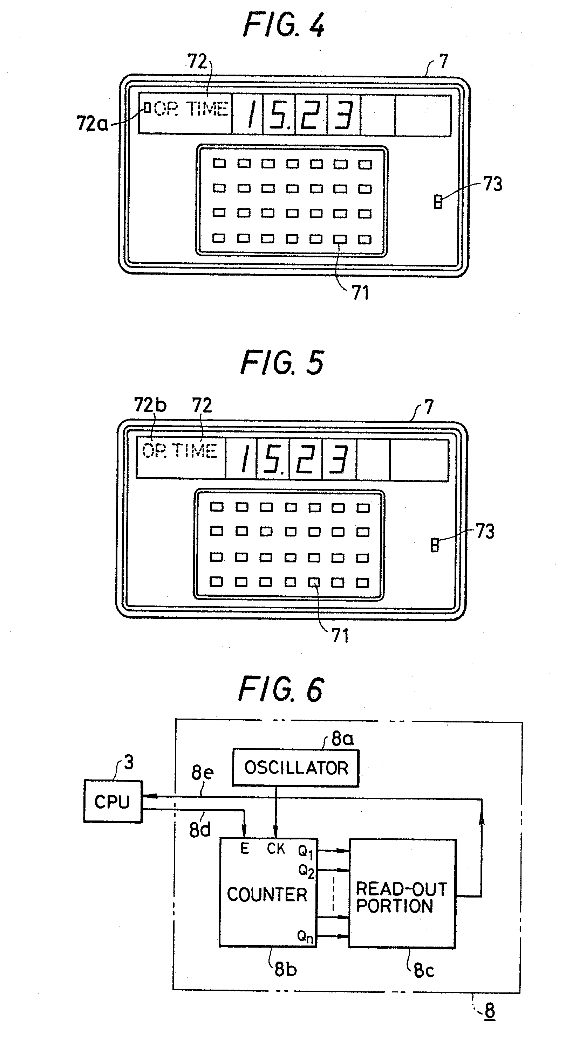

Accordingly, the aforecited operation for measuring or displaying the arithmetic processing time may well be carried out by assigning a specified No. to the timer and designating the No. Alternatively, the arithmetic processing time may well be displayed by designating a special No. or symbol. Besides, while any common monitoring display, the read-out display of a program, or the like is not performed, the measured value of the aforementioned arithmetic processing time may well be continually displayed instead of "0" display or blank display. Further, when the arithmetic processing time is displayed, a display device 72a employing an LED or a lamp is lit up as shown in Fig. 4, or a liquid crystal display device 72b is employed as shown in Fig. 5. Thus, it may well be indicated that a numerical value displayed in the display portion 72 is the operation time or the arithmetic processing time.

- 12 -

0176655

The arrangement of the measuring unit 8 in Fig. 1 is shown in Fig. 6. The measuring unit 8 is composed of an oscillator 8a for generating a clock signal, a counter 8b, and a read-out portion 8c connected to the output terminals of the counter 8b. The counter 8b is constructed of a counter IC or the like, and has its 'Enable' terminal E connected to the CPU 3 through a signal line 8d, its clock input terminal CK connected to the oscillator 8a constructed of a quartz oscillator or the like, and its output terminals $Q_1 - Q_n$ connected to the read-out portion 8c constructed of a buffer IC or the like. The output of the read-out portion 8c is connected to the data bus of the CPU 3 through a signal line 8e. Thus, when a measurement start signal is applied from the CPU 3 to the counter 8b through the signal line 8d, the counter 8b counts the operation time or the like, and the read-out portion 8c reads the result and transfers it to the CPU 3 through the signal line 8e. The measuring unit 8 is not restricted to the foregoing one, but it may well be one utilizing a counter built in the CPU 3.

According to the present embodiment, the addition means owing to the system ROM 4 is disposed in the program status. Therefore, information for judging whether or not an input signal or the like is erroneously responded to can be obtained even in the course of creating a sequence program, and if the erroneous response occurs, a job for improving the sequence program can be immediately carried out, so that a programmable controller which exhibits a favorable job efficiency for the program creation can be provided.

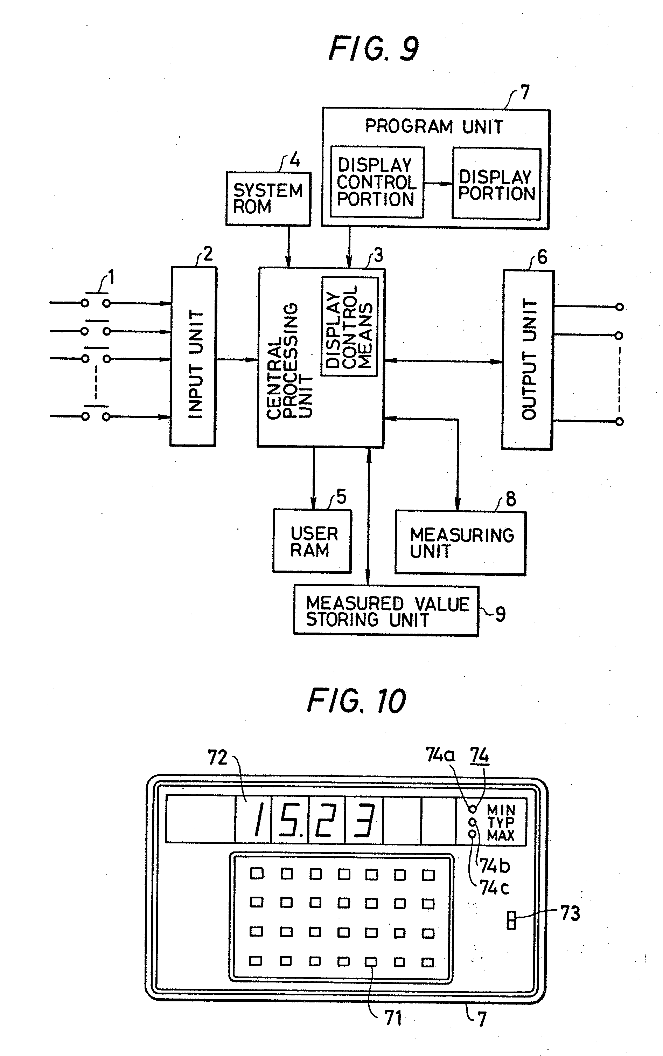

Next, a second embodiment of the present invention will be described with reference to Figs. 9 - 11.

In usual logic operations etc., required operation times corresponding to instruction words are often fixed, but some operating contents involve discrepancies. By way of example, the processing times are about 10 microseconds in logic operations such as AND and OR, whereas they become nearly double and nearly sextuple in a differential output and a timer output respectively.

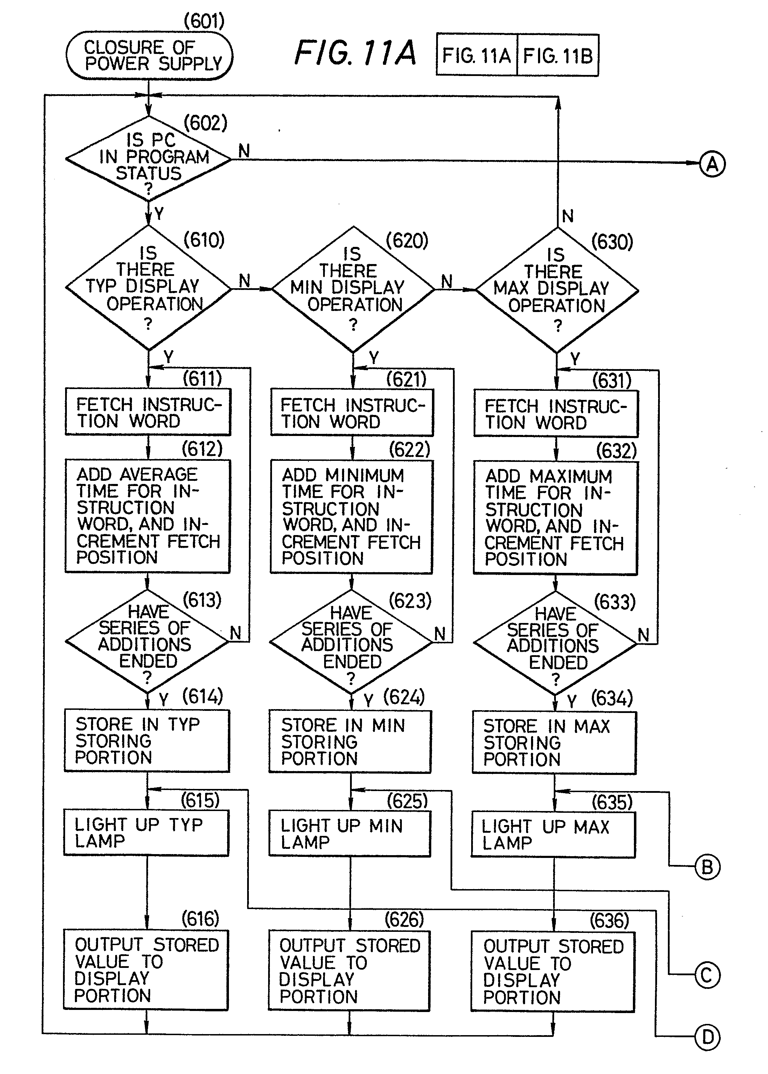

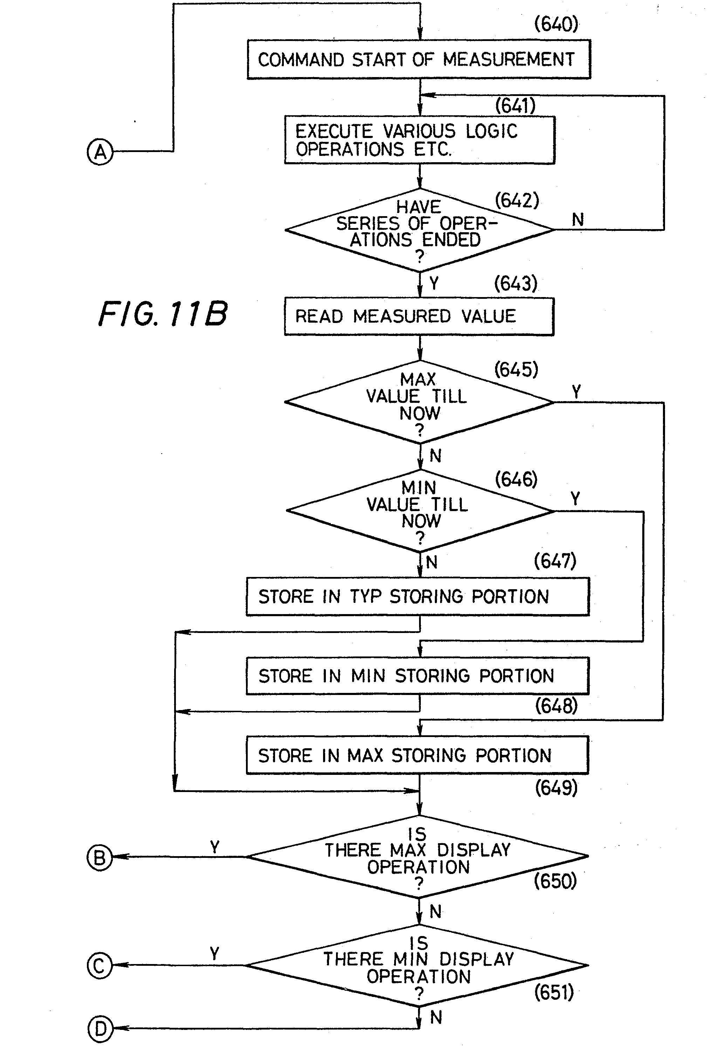

In performing a high speed control, accordingly, the discrepancies must be considered. With this point taken into consideration, the present embodiment is furnished with means for calculating or measuring a maximum value (MAX), a minimum value (MIN) and an average value (TYP) and displaying them. The present embodiment differs from the preceding embodiment, in the following respects. A measured value storing unit 9 is comprised as shown in Fig. 9. As seen from an operating flow shown in Fig. 11, in the program status, each calculated value is checked by the first measurement means, and in any other case, a measured value by the measuring unit 8 which is second measurement means is checked and the result is stored in the measured value storing unit 9. The stored value to be displayed is output to display portions 72 and 74 shown in Fig. 10.

The operations of the flow in Fig. 11 will now be explained. When the power supply of the programmable controller is closed (Step 601), whether the PC is in the program status or the status capable of executing a logic operation etc. is decided by the CPU 3 and the system ROM 4 (Step 602). This decision is rendered on the basis of the status of the selector switch 73. In a case where the decision of Step 602 is YES, it is decided if there are the respective display operations of the average value, minimum value and maximum value of the arithmetic processing time (Step 610, Step 620 and Step 630). When the answer of Step 610 is YES, that is, when "there is the display operation", a program content is read out, namely, an instruction word is fetched (Step 611). Subsequently, an average period of time required for this instruction word is added and the result is stored in the CPU 3, whereupon the fetch position of an instruction word is incremented (Step 612). Whether or not a series of fetch and add processes have ended is checked (Step 613). Unless they have ended, the operating flow returns to Step 611, and the fetch and add processes are repeated.

If they have ended, the operating flow proceeds to the next processing step, at which the added content stored in the CPU 3 is stored in the TYP storing portion of the CPU 3 (Step 614). Then, a TYP lamp 74b indicative of the average value installed on the sort display portion 74 provided in the display portion 72 is lit up (Step 615), and the value stored in the TYP storing portion is displayed by the display portion 72 (Step 616), whereupon Step 602 is returned to.

In a case where the decision of Step 610 is NO, the control flow proceeds to Step 620, which decides "if there is the display operation of the minimum value". When Step 620 affords YES, a program content is read out, that is, an instruction word is fetched (Step 621). Subsequently, a minimum period of time required for this instruction word is added, and the result is stored in the CPU 3, whereupon the fetch position of an instruction word is incremented (Step 622). Whether or not a series of fetch and add processes have ended is decided (Step 623). Unless they have ended, the operating flow returns to Step 621, and the fetch and add processes are repeated.

If they have ended, the operating flow proceeds to the next processing step, at which the added content stored in the CPU 3 is stored in the MIN storing portion of the CPU 3 (Step 624). Then, a MIN lamp 74a indicative of the minimum value installed on the sort display portion 74 provided in the display portion 72 is lit up (Step 625), and the value stored in the MIN storing portion is displayed by the display portion 72 (Step 626), whereupon Step 602 is returned to.

In a case where the decision of Step 620 is NO, the operating flow proceeds to Step 630, which decides "if there is the display operation of the maximum value". When Step 630 affords YES, a program content is read out, that is, an instruction word is fetched (Step 631). Subsequently, a maximum period of time required for this instruction word is added, and the result is stored in the CPU 3, whereupon the fetch position of an instruction word is incremented (Step 632). Whether or not a series of fetch and add processes have ended is decided (Step 633). Unless they have ended, the operating flow returns to Step 631, and the fetch and add processes are repeated.

If they have ended, the operating flow proceeds to the next processing step, at which the added content stored in the CPU 3 is stored in the MAX storing portion of the CPU 3 (Step 634). Then, a MAX lamp 74c indicative of the maximum value installed on the sort dispaly portion 74 provided in the display portion 72 is lit up (Step 635), and the value stored in the MAX storing portion is displayed by the display portion 72 (Step 636), whereupon Step 602 is returned to.

In a case where the decision of Step 630 is NO, the operating flow proceeds to Step 602.

In a case where the decision of Step 602 is NO, the CPU 3 performs the process of a measurement start command for the measuring unit 8 (Step 640). Thereafter, it executes various logic operations etc. on the basis of sequence contents stored in the user RAM (Step 641), and it decides whether or not a series of operations have ended (Step 642). Unless they have ended, the operating flow returns to Step 641 at which various logic operations etc. are repeatedly performed.

When Step 642 affords YES, the CPU 3 reads out a measured value from the measuring unit 8 (Step 643) and decides if the value is the maximum value till now (Step 645). Subject to YES, the value is stored in the MAX storing portion (Step 649), and subject to NO, if the value is the minimum value till now is decided (Step 646).

If the answer of Step 646 is YES, the value is stored in the MIN storing portion, and if it is NO, the value is deemed the average value and is stored

- 18 -

0176655

in the TYP storing portion (Step 647). Next, "if there is the MAX display operation" is decided (Step 650). If Step 650 affords YES, the operating flow jumps to Step 635 which lights up the MAX lamp, and the stored value is output to the display portion (Step 636), whereupon Step 602 is returned to. In a case where Step 650 affords NO, "if there is the MIN display operation" is decided (Step 651). Subject to YES, the operating flow jumps to Step 625 which lights up the MIN lamp, and the stored value is output to the display portion (Step 626), whereupon Step 602 is returned to.

In a case where Step 651 is NO, the operating flow jumps to Step 651 which lights up the TYP lamp, and the stored value is output to the display portion (Step 616), whereupon Step 602 is returned to.

While, in the present embodiment, the display of "MIN", "TYP" or "MAX" is done by lighting up the corresponding lamp, the letters "MIN", "TYP" and "MAX" may well be displayed with a liquid crystal or the like. Besides, the display may well be sentences in Japanese. Further, whether the display value is the display in the program status or the display of the measured value may well be indicated by the display portion in accordance with the decision result of Step 602.

The MAX storing portion, MIN storing portion and

- 19 -

0176655

TYP storing portion are formed by apportioning the measured value storing unit 9, and they are constructed of random access storage elements.

The average value (TYP) in the case where the PC is not in the program status is a numerical value obtained by dividing the total value of the measured values by the number of times of the measurements. However, in a case where the calculation of the average value requires a long time due to the execution of the division to the extent of forming an obstacle to the period of time for executing various logic operations, a measured time on each occasion may well be stored.

According to the second embodiment described above, a margin for an input signal etc. supposed by measuring the maximum value can be particularly known, and a reliable high-speed control can be performed.

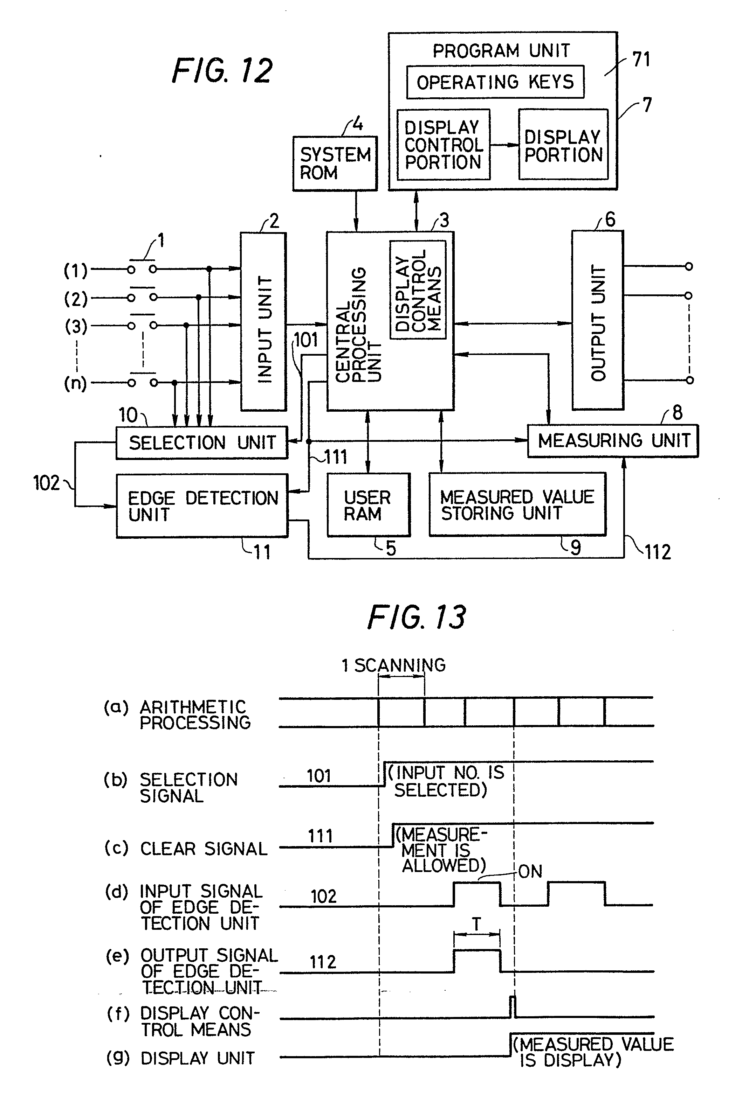

Next, a third embodiment of the present invention will be described with reference to Figs. 12 - 14.

The first and second embodiments are premised on the condition that the external input signal source 1 operates in a previously assumed time. Due to any abnormality, however, the operating time of the external input signal source fluctuates to shorten or conversely lengthen.

The third embodiment of the present invention takes this point into consideration. As shown in Fig. 12, it comprises a selection unit 10 and an edge detection unit 11 in addition to the second embodiment, whereby it can measure, not only the arithmetic processing time, but also the ON/OFF times of an actual external input signal etc. The measurement of the arithmetic processing time is similar to that in the second embodiment, and shall not be repeatedly explained.

The embodiment operates as follows. First, using the operating keys 71 of the program unit 7, Nos. of external input signal lines 1 - n are designated. Thus, the central processing unit 3 supplies the selection unit 10 through a signal line 101 with a signal for selecting the external input signal line of the above No. Subsequently, using different ones of the operating keys 71, either the measurement of the ON time (hereinbelow, termed 'ON measurement') or the measurement of the OFF time (hereinbelow, termed 'OFF measurement') is designated. Then, the central processing unit 3 supplies the edge detection unit 11 through a signal line 111 with a signal corresponding to the ON measurement or the OFF measurement. Subsequently, the CPU 3 supplies also the measuring unit 8 with the above signal and commands it to measure an external input signal. Next, the edge detection unit 11 monitors the presence or absence of an edge as to the external input signal selected by the selection unit 10. By way of example, in case of the ON measurement with positive logic, when an upward edge has been detected in the input signal, the edge detection unit sends a measurement start signal to the measuring unit 8 through a signal line 112, and when a downward edge has been detected next, it sends a measurement stop signal to the measuring unit 8. Thus, the ON time of the input signal in the positive logic is measured. On the other hand, in case of the OFF measurement with the positive logic, a period of time from the downward edge to the upward edge of the input signal is measured.

Fig. 13 shows a time chart in the case of the ON measurement with the positive logic. When the line No. of an external input signal has been designated by the operating keys 71 to start arithmetic processing as shown in Fig. 13, (a), a selection signal is supplied from the CPU 3 to the selection unit 10 through the signal line 101 with the progress of a program (Fig. 13, (b)). Next, on the basis of the designation of either the ON measurement or the OFF measurement from the operating keys 71, a clear signal for allowing measurement is supplied from the CPU 3 through the signal line 111 (Fig. 13, (c)).

Next, when the line selected by the selection signal

- 22 -

0176655

is fed with the input signal, it is supplied to the edge detection unit 11 as its input signal through the selection unit 10 as well as a signal line 102 (Fig. 13, (d)). The edge detection unit 11 generates an output signal between the leading and trailing edges of the input signal and supplies it to the measuring unit 8 through the signal line 112 (Fig. 13, (e)). The measuring unit 8 measures a period of time T during which the output signal is provided from the edge detection unit 11, and which is read by the CPU 3. The CPU 3 as the display control means supplies the display control portion with a signal so as to display the period of time T (Fig. 13, (f)). In response to this signal, the display unit displays the period of time T (Fig. 13, (g)). In the present embodiment, in order to shorten a time interval from signal input till display, only a first signal among input signals to the edge detection unit is measured and displayed. It is also allowed, however, to measure several input signals and to display any of the maximum value, average value and minimum value in accordance with the status of the selector switch 73.

Now, the edge detection unit in the present embodiment will be described.

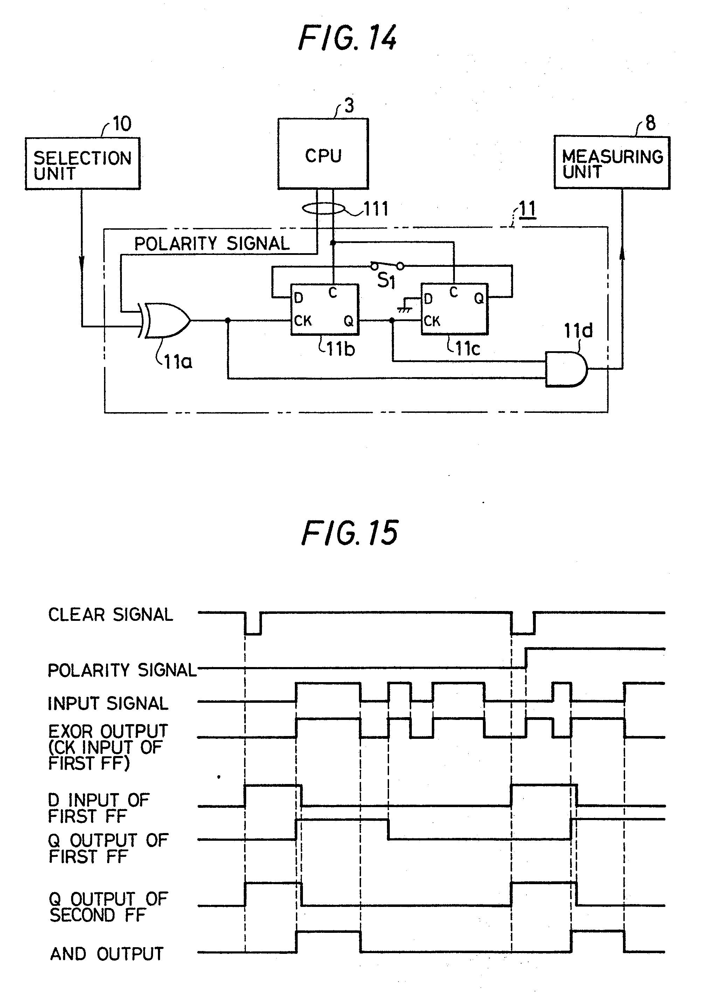

As shown in Fig. 14, the edge detection unit 11 is composed of logic elements of exclusive OR 11a, first

flip-flop (hereinbelow, abbreviated to '1st FF') 11b, second flip-flop (hereinbelow, abbreviated to '2nd FF') 11c, and AND 11d. The exclusive OR 11a has one input supplied with the signal from the selection unit, and has the other input supplied with a polarity / signal from the CPU 3 through the signal line 111. According to the polarity signal, whether the ON time A of an input signal is measured or the OFF time C is measured is changed-over as illustrated in Fig. 8. The output of the exclusive OR 11a is branched in two, one of which is connected to the clock input terminal CK of the 1st FF 11b and the other of which is connected to one input terminal of the 2-input AND circuit 11d. The 1st FF 11b is for edge detection, and its clear terminal C is connected to the CPU 3 and is supplied with the clear signal for allowing the measurement, while its output terminal Q is connected to the clock input terminal CK of the 2nd FF 11c and the other input terminal of the 2-input AND circuit 11d. Besides, the data input terminal D of the 1st FF 11b is connected to the output terminal $\overline{Q}$ of the 2nd FF 11c. The 2nd FF 11c serves to inhibit the outputs of the 1st FF 11b responsive to the second input signal et seq. Its clear terminal C is connected to the CPU 3 and is supplied with the clear signal, its output terminal $\overline{Q}$ is connected to the data input terminal D of the 1st FF 11b, and its data input terminal D is grounded. Thus, even when input signals are successively received after the supply of the clear signal as illustrated in Fig. 15, the Q output of the 1st FF 11b is provided in response to only the first input signal, and also the output of the AND 11d is provided in response to only the first input signal. Thus, the edge detection circuit 11 detects only an input signal change immediately after the measurement allowance as illustrated in the time chart of Fig. 13 and inhibits any output from the edge detection unit until the measurement is allowed again. In order to measure the maximum value, minimum value and average value of input signals, a switch S1 may be inserted in a line connecting the data input terminal D of the 1st FF 11b and the $\overline{Q}$ output terminal of the 2nd FF 11c and may be turned OFF.

In the manner thus far described, the value measured by the measuring unit 8 is read out by the central processing unit 3 and is displayed by the dispaly portion 72. At this time, as in the second embodiment, the CPU 3 stores the maximum value, minimum value and average value in the measured value storing unit 9 and lights up the corresponding lamps of the display portion 74.

- 25 -

0176655

In the present embodiment, the processing times of a logic operation etc. are displayed by steps similar to those of the second embodiment.

According to the present embodiment, in a case where the phenomenon of an erroneous response has occurred due to any abnormality, the input time of an external input signal can be measured, so that the cause can be readily found and the efficient maintenance of the PC is possible.

A construction is also allowed wherein in case of programming, the supposed shortest time of external input signals is registered in advance; during the creation of a sequence program, an adding computation is performed each time, and the result is compared with the registered value; and an alarm is issued when the registered value has been exceeded.

In the present embodiment, the PC itself may well be stopped for safety in a case where an external input signal too short to respond to or an external input signal much longer than a predetermined time has been measured.

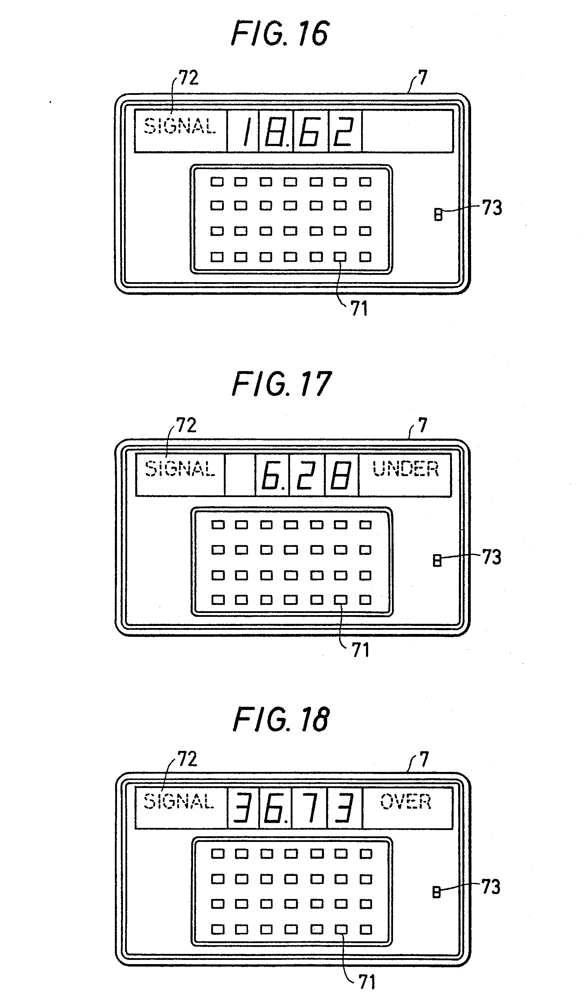

In displaying the measured value of an input signal, it may well be indicated on the display portion 72 that the display value is the input signal as illustrated in Fig. 16. Further, when a too short input signal or a too long input signal has been received, "Signal
is too short" or "Signal is too long" may well be indicated
as shown in Fig. 17 or Fig. 18 respectively.

Further, in the foregoing embodiments, the display
portion has been shown as the exclusively used one provided
in the program unit, but it may well be a CRT, a plasma
display, a liquid crystal display panel or the like
which is provided separately from the PC proper.

What I claim is:

1. A programmable controller comprising:

storage means (4,5) to store a program;

central processing means (3) to execute a logic operation of an input signal on the basis of the program stored in the storage means (4,5);

measurement means (8) to measure an arithmetic processing time of the program; and

display control means (3) to perform a control so as to display the arithmetic processing time measured by the measurement means (8).

2. A programmable controller according to claim 1, wherein the storage means is a user RAM (5).

3. A programmable controller according to claim 1, wherein the display control means is the central processing means (3).

4. A programmable controller according to one of the claims 1 - 3,

c h a r a c t e r i z e d   i n   t h a t

it further comprises

a program input unit (2) which inputs a program; and

a display device (7) which displays the arithmetic processing time under the control of the display control means.

5. A programmable controller according to claim 4,

- 2 -                                    0176655

characterized in that the display control means in the central processing means, and the display device is assembled in the same casing as that of the program input unit.

6.  A programmable controller according to one of the preceding claims,

characterized in that it further comprises

measured value storing means (9) to store the arithmetic processing time measured by the measurement means.

7.  A programmable controller according to claim 6, characterized in that the display control means perform a control so as to display the arithmetic processing time stored in said measured value storing means.

8.  A programmable controller according to claim 6, characterized in that

the measured value storing means are divided in at least two parts, in any of which the arithmetic processing time measured by the measurement means is stored according to a magnitude thereof; and

the display control means perform a control so as to selectively display the measured values stored in the divided parts of the measured value storing portion, on the basis of signals of display selection means.

9.  A programmable controller according to one of the claims 6 - 8,

characterized in that the display control means is the central processing means.

10. A programmable controller according to claim 8, wherein said measured value storing means is divided in three parts, in which a maximum value, a minimum value and an average value of the arithmetic processing time are stored respectively.

11. A programmable controller according to claim 8, wherein said measurement means is fed with the input signal and measures either of an ON time and an OFF time of the input signal.

12. A programmable controller according to one of the claims 1 to 3,
characterized in that it further comprises

edge detection means to detect edges of the input signal which is supplied from an external signal source to the central processing means; whereby

the measurement means selectively measure either the arithmetic processing time of the program by the central processing means and a time between the edges of the input signal; and

measured value storing means to store the value measured by the measurement means; whereby

the display control means perform a control so as to display the measured value stored in the measured value storing means.

13. A programmable controller according to claim 12, wherein the measured value storing means is divided in three parts, in which a maximum value, a minimum value and

0176655

an average value of the measured value are stored respectively.

14. A programmable controller according to claim 12, wherein the measured value storing means is divided in three parts, in which a maximum value, a minimum value and an average value of the measured value are stored respectively, and

the display control means perform a control so as to selectively indicate which of the maximum value, the minimum value and the average value the displayed measured value is.

0176555

## FIG. 1

## FIG. 2

0176655

## FIG. 3

```
      CLOSURE OF        (301)
      POWER SUPPLY

           IS PC
        IN PROGRAM     N ──────────────────────────┐
          STATUS                                    │
            ?        (302)                          │ Y
            │Y                                       │
            │                                        IS
           IS                                      THERE
         THERE        N                          OPERATION
       DISPLAY OPER-  ◄─────┐              N     STOP SIG-
         ATION             │           ◄──────   NAL
           ?      (303)    │                        ?      (313)
            │Y              │
            │               │              COMMAND START
       FETCH INSTRUC-       │              OF MEASUREMENT  (308)
       TION WORD   (304)    │
            │               │              EXECUTE VARIOUS
       ADD REQUIRED         │              LOGIC OPERATIONS
       TIME FOR IN-         │              ETC
       STRUCTION            │                   │        (309)
       WORD, AND  (305)     │                HAVE
       INCREMENT            │              SERIES
       FETCH POSITION       │           OF OPERATIONS   N
            │               │              ENDED     ──────┘
           HAVE             │                ?     (310)
         SERIES             │                │Y
       OF ADDITIONS  N      │                IS
         ENDED     ─────────┘              THERE
           ?      (306)               DISPLAY OPER-    N
            │Y                           ATION      ──────►
       OUTPUT ADDED                        ?     (311)
       CONTENT TO                          │Y
       DISPLAY PORTION  (307)         READ OUT MEASURED
                                      VALUE AND OUTPUT
                                      IT TO DISPLAY PORTION
                                                (312)
```

0176655

## FIG. 4

OP. TIME  1 5.2 3

72  72a  7  73  71

## FIG. 5

OP TIME  1 5.2 3

72b  72  7  73  71

## FIG. 6

3
CPU

8e
8d

8a
OSCILLATOR

E  CK  Q₁
Q₂

COUNTER

Qₙ

READ-OUT
PORTION

8b  8c  8

0176655

## FIG. 7

| LOD | 1 |
|-----|-----|
| AND | 2 |
| OUT | 100 |
| LOD | 3 |
| OR | 4 |
| OUT | 101 |

## FIG. 8

INPUT SIGNAL

ON    OFF    ON

A    C    OFF

t    t    t    t

ARITHMETIC
PROCESSING

1 SCAN TIME

5/10

0176655

## FIG. 9

## FIG. 10

0176655

**FIG. 11A**  | FIG. 11A | FIG. 11B |

(601) CLOSURE OF POWER SUPPLY

(602) IS PC IN PROGRAM STATUS ? — N → (A)

Y

(610) IS THERE TYP DISPLAY OPERATION ? — N → (620) IS THERE MIN DISPLAY OPERATION ? — N → (630) IS THERE MAX DISPLAY OPERATION ? — N

Y

(611) FETCH INSTRUCTION WORD

(612) ADD AVERAGE TIME FOR INSTRUCTION WORD, AND INCREMENT FETCH POSITION

(613) HAVE SERIES OF ADDITIONS ENDED ? — N

Y

(614) STORE IN TYP STORING PORTION

(615) LIGHT UP TYP LAMP

(616) OUTPUT STORED VALUE TO DISPLAY PORTION

Y

(621) FETCH INSTRUCTION WORD

(622) ADD MINIMUM TIME FOR INSTRUCTION WORD, AND INCREMENT FETCH POSITION

(623) HAVE SERIES OF ADDITIONS ENDED ? — N

Y

(624) STORE IN MIN STORING PORTION

(625) LIGHT UP MIN LAMP

(626) OUTPUT STORED VALUE TO DISPLAY PORTION

Y

(631) FETCH INSTRUCTION WORD

(632) ADD MAXIMUM TIME FOR INSTRUCTION WORD, AND INCREMENT FETCH POSITION

(633) HAVE SERIES OF ADDITIONS ENDED ? — N

Y

(634) STORE IN MAX STORING PORTION

(635) LIGHT UP MAX LAMP

(636) OUTPUT STORED VALUE TO DISPLAY PORTION

(B)
(C)
(D)

7110

0176655

FIG. 11B

(640) COMMAND START OF MEASUREMENT

(641) EXECUTE VARIOUS LOGIC OPERATIONS ETC.

(642) HAVE SERIES OF OPERATIONS ENDED ? — N

(643) READ MEASURED VALUE (Y)

(645) MAX VALUE TILL NOW ? — Y

(646) MIN VALUE TILL NOW ? — Y (N)

(647) STORE IN TYP STORING PORTION

STORE IN MIN STORING PORTION

(648) STORE IN MAX STORING PORTION

(649) IS THERE MAX DISPLAY OPERATION ? — Y → B

(650) N

IS THERE MIN DISPLAY OPERATION ? — Y → C

(651) N → D

A

8/10

0176655

## FIG. 12

PROGRAM UNIT — 71
OPERATING KEYS

SYSTEM ROM — 4

DISPLAY CONTROL PORTION → DISPLAY PORTION — 7

(1) (2) (3) ... (n) — 1

INPUT UNIT — 2

CENTRAL PROCESSING UNIT — DISPLAY CONTROL MEANS — 3

OUTPUT UNIT — 6

SELECTION UNIT — 10

101

111

102

EDGE DETECTION UNIT — 11

USER RAM — 5

MEASURED VALUE STORING UNIT — 9

MEASURING UNIT — 8

112

## FIG. 13

1 SCANNING

(a) ARITHMETIC PROCESSING

(b) SELECTION SIGNAL — 101 — (INPUT NO. IS SELECTED)

(c) CLEAR SIGNAL — 111 — (MEASUREMENT IS ALLOWED)

(d) INPUT SIGNAL OF EDGE DETECTION UNIT — 102 — ON

(e) OUTPUT SIGNAL OF EDGE DETECTION UNIT — 112 — T

(f) DISPLAY CONTROL MEANS

(g) DISPLAY UNIT — (MEASURED VALUE IS DISPLAY)

# FIG. 14

# FIG. 15

0176655

## FIG. 16

## FIG. 17

## FIG. 18